# EUROPEAN PATENT SPECIFICATION

(11) **EP 4 052 971 B1**
(45) Date of publication and mention of the grant of the patent: **27.08.2025**
(21) Application number: 20882589.3
(22) Date of filing: 15.09.2020
(51) Int. Cl.: B60R 21/207, B60R 21/2338

(54) **AIRBAG AND AIRBAG ASSEMBLY**
AIRBAG UND AIRBAGANORDNUNG
COUSSIN DE SÉCURITÉ GONFLABLE ET ENSEMBLE DE COUSSIN DE SÉCURITÉ GONFLABLE

(30) Priority: 31.10.2019 CN 201911052364
(43) Date of publication of application: 07.09.2022
(73) Proprietor: Autoliv Development AB, 44783 Vargarda (SE)
(72) Inventor: WANG, Youguang, Shanghai 201807 (CN); HONG, Dan, Shanghai 201807 (CN); WANG, Renyong, Shanghai 201807 (CN); WANG, Liang, Shanghai 201807 (CN); MO, Bingyi, Shanghai 201807 (CN)
(74) Representative: Schön, Thilo
(86) International application number: PCT/CN2020/115406
(87) International publication number: WO 2021/082779

(56) References cited:
- WO-A1-2019/193082
- CN-A- 105 857 241
- CN-A- 108 016 397
- CN-A- 108 016 397
- CN-A- 110 281 871
- US-A1- 2005 023 811
- US-A1- 2006 119 083
- US-A1- 2018 326 938
- US-B2- 10 300 878

## Description

### TECHNICAL FIELD

The present invention relates to a safety device of a vehicle, in particular, to a safety airbag and a safety airbag assembly.

### BACKGROUND

A safety airbag device is commonly used in a vehicle to protect a passenger in the vehicle from injury in an emergent situation. The safety airbag device includes a safety airbag and a gas generator. The safety airbag is generally in a stowed state, and is inflated only when the vehicle collides or is impacted. When the vehicle collides or is impacted, gas generated by the gas generator by means of explosion quickly inflates the safety airbag in the stowed state, and the inflated safety airbag expands to protect the passenger of the vehicle.

However, the safety airbag in an expanding inflated state, upon protecting the passenger, may depart from a working position due to an insufficient support force thereof when impacted by the passenger. In this case, there is a risk that the passenger cannot be protected or even other passengers are injured, thereby adversely affecting the reliable operation and safety of the safety airbag.

Therefore, a safety airbag with high reliability and high safety is desired. The document US2018/326938A1 discloses a safety airbag according to the preamble of claim 1.

### SUMMARY

An objective of the present invention is to provide a safety airbag and a safety airbag assembly with high reliability and high safety.

Provided in an aspect of the present invention is a safety airbag, including:
an air bag having an inflated state and a stowed state; and
a limiting mechanism disposed outside the air bag and configured to limit a position of the air bag in the inflated state,
wherein the limiting mechanism comprises an accommodating cavity and a pull belt, the accommodating cavity is provided on an outer surface of the air bag, and the pull belt is configured to pass through the accommodating cavity.

According to an embodiment of the present invention, the accommodating cavity is configured as a channel extending on at least one panel of the air bag in the inflated state, and the pull belt is configured to be freely movable in the channel.

According to the present invention the safety airbag assembly is including:
the safety airbag according to any one of the foregoing safety airbags; and
a driver seat, the safety airbag being arranged on a right side of the driver seat,
wherein the pull belt is configured such that both ends thereof are respectively fixed to a frame of the driver seat.

According to an embodiment of the present invention, the air bag, in an inflated state, has a left panel, a right panel, and an intermediate panel connecting the left panel and the right panel, the left panel is closer to a driver than the right panel, and the accommodating cavity of the limiting mechanism is located on the left panel.

According to an embodiment of the present invention, the accommodating cavity of the limiting mechanism is configured to extend along an outer edge of the left panel.

According to an embodiment of the present invention, the accommodating cavity is configured to start extending from a top of the left panel of the air bag and stop at a distance from a bottom of the left panel when the air bag is in the inflated state.

According to an embodiment of the present invention, one end of the pull belt is configured to be fixed to a front side of the frame of the driver seat, and the other end of the pull belt is configured to be fixed to a rear side of the frame of the driver seat.

According to an embodiment of the present invention, both ends of the pull belt are configured to be spaced apart by a distance in a height direction when being fixed to the frame of the driver seat.

According to an embodiment of the present invention, both ends of the pull belt are arranged to be detachably fixed to the frame of the driver seat.

According to an embodiment of the present invention, both ends of the pull belt are respectively provided with a mounting frame having a through hole, and the mounting frames respectively fix both ends of the pull belt to the frame of the driver seat via bolts.

### BRIEF DESCRIPTION OF THE DRAWINGS

FIG. 1 shows a safety airbag according to an embodiment of the present invention.
FIG. 2 shows a safety airbag assembly according to an embodiment of the present invention.

### DETAILED DESCRIPTION

Specific embodiments of a safety airbag and a safety airbag assembly according to the present invention will be described below with reference to the accompanying drawings. The following detailed description and the accompanying drawings are used to illustratively explain the principles of the present invention. The present invention is not limited to the described preferred embodiments, and the protection scope of the present invention is defined by the claims.

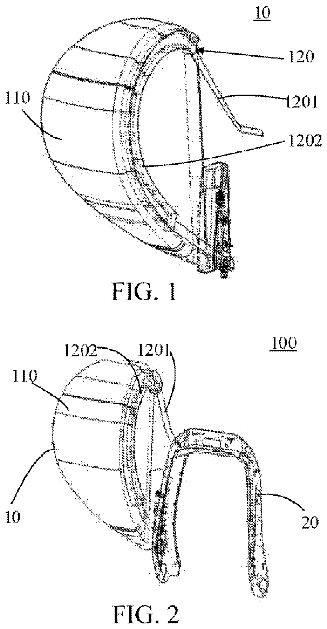

FIG. 1 shows a safety airbag according to an embodiment of the present invention. The safety airbag according to an embodiment of the present invention is described below with reference to FIG. 1.

As shown in FIG. 1, a safety airbag 10 according to an embodiment of the present invention includes an air bag 110 and a limiting mechanism 120. The air bag 110 has an inflated state and a stowed state, and the air bag 110 shown in FIG. 1 is in the inflated state for clarity of showing the limiting mechanism 120. The limiting mechanism 120 is arranged outside the air bag 110. Specifically, the limiting mechanism 120 includes an accommodating cavity 1202 and a pull belt 1201. The accommodating cavity 1202 is arranged on an outer surface of the air bag 110 and configured as a channel extending on a panel of the air bag 110, and the pull belt 1201 is configured to pass through the accommodating cavity 1202 and to be freely movable in the accommodating cavity 1202. The limiting mechanism 120 is configured to limit a position of the air bag 110 in the inflated state, which will be described in detail below with reference to FIG. 2.

FIG. 2 shows a safety airbag assembly according to an embodiment of the present invention. The safety airbag assembly according to an embodiment of the present invention is described below with reference to FIG. 2.

As shown in FIG. 2, the safety airbag assembly 100 according to the present invention includes the safety airbag 10 shown in FIG. 1 and a driver seat 20, and the safety airbag 10 is arranged on a right side of the driver seat 20. It is to be noted that in describing the safety airbag assembly of the present invention, front, rear, left, and right sides associated with the safety airbag assembly and components thereof are consistent with front, rear, left, and right sides of a vehicle provided with the safety airbag assembly.

With continued reference to FIG. 2, the pull belt 1201 of the limiting mechanism 120 of the safety airbag device 10 is configured such that both ends thereof are respectively fixed to a frame of the driver seat 20. One example may be that one end of the pull belt is configured to be fixed to a front side of the frame of the driver seat and the other end of the pull belt is configured to be fixed to a rear side of the frame of the driver seat. And, both ends of the pull belt are respectively provided with a mounting frame having a through hole, and the mounting frames respectively fix both ends of the pull belt to the frame of the driver seat via bolts, so that both ends of the pull belt are arranged to be detachably fixed to the frame of the driver seat. However, the safety airbag assembly of the present invention is not limited to the above example, those skilled in the art may arrange, according to actual working conditions, both ends of the pull belt to be permanently fixed to the frame of the driver seat, and both ends of the pull belt may be fixed to the same side of the frame of the driver seat (the front side of the frame or the rear side of the frame).

With continued reference to FIG. 2, the air bag 110 has a left panel, a right panel, and an intermediate panel connecting the left panel and the right panel in an inflated state. The left panel is closer to a driver than the right panel, and the accommodating cavity 1202 of the limiting mechanism 120 is located on the left panel. In the embodiment shown in FIG. 2, the accommodating cavity 1202 of the limiting mechanism 120 is configured to extend along an outer edge of the left panel to cause the pull belt 1201 to apply a force widely on the left panel of the air bag 110 as much as possible. In addition, the accommodating cavity 1202 is configured to start extending from a top of the left panel of the air bag 110 and stop at a distance from a bottom of the left panel when the air bag 110 is in the inflated state, so as to help the air bag 110 to abut the driver over as large an area as possible. Also, both ends of the pull belt 1201 are configured to be spaced apart by a distance in a height direction when being fixed to the frame of the driver seat 20, thereby effectively limiting the position of the air bag 110.

Therefore, in the safety airbag and the safety airbag assembly of the present invention, when the air bag of the safety airbag is in the inflated state, if the air bag is impacted by a passenger, i. e. a driver in the driver seat 20 in FIG. 2 impacts the air bag 10 rightwards, the pull belt of the limiting mechanism applies a leftward pulling force on the air bag through the accommodating cavity due to the arrangement of the limiting mechanism outside the air bag of the safety airbag, so that the air bag is sufficiently supported and will not be impacted rightwards by the driver to depart from a working position, or even to impact a front right passenger. Therefore, the safety airbag and the safety airbag assembly of the present invention can achieve the purpose of limiting the position of the air bag in the inflated state of the safety airbag, thereby avoiding a risk that the passenger cannot be protected or even other passengers are injured, and having the advantages of high reliability and high safety.

Although in the embodiments shown in FIGS. 1 and 2, the accommodating cavity is shown continuously extending along the outer edge of the left panel of the air bag, this is merely an example, and the safety airbag of the present invention is not limited thereto. For example, those skilled in the art may arrange the accommodating cavity of the limiting mechanism as a plurality of sections extending intermittently on the left panel of the air bag according to actual working conditions. For another example, those skilled in the art may arrange the accommodating cavity of the limiting mechanism to extend on both the left panel and the intermediate panel of the air bag according to actual working conditions.

As described above, although the exemplary embodiments of the present invention have been described in the specification with reference to the accompanying drawings, the present invention is not limited to the aforementioned specific implementations, and the scope of protection of the present invention should be defined by the claims and equivalent meanings thereof.

## Claims

1. A safety airbag assembly (100) of a left hand driven vehicle, said safety airbag assembly (100) comprising a driver seat (20) and a safety airbag (10) being arranged on the right side of the driver seat (20),
wherein the safety airbag (10), comprises:
an air bag (110) having an inflated state and a stowed state; and
a limiting mechanism (120) disposed outside the air bag (110) and configured to limit a position of the air bag (110) in the inflated state,
wherein the limiting mechanism (120) comprises an accommodating cavity (1202) and a pull belt (1201), the accommodating cavity (1202) is provided on an outer surface of the air bag (110), and the pull belt (1201) is configured to pass through the accommodating cavity (1202),
**characterized in that**
both ends of the pull belt (1201) are respectively fixed to a frame of the driver seat (20).

2. The safety airbag assembly (100) according to claim 1, wherein the accommodating cavity (1202) is configured as a channel extending on at least one panel of the air bag (110) in the inflated state, and the pull belt (1201) is configured to be freely movable in the channel.

3. The safety airbag assembly (100) according to claim 1 or claim 2, wherein the air bag (110), in an inflated state, has a left panel, a right panel, and an intermediate panel connecting the left panel and the right panel, the left panel is closer to a driver than the right panel, and the accommodating cavity (1202) of the limiting mechanism (120) is located on the left panel.

4. The safety airbag assembly (100) according to claim 3, wherein the accommodating cavity (1202) of the limiting mechanism (120) extends along an outer edge of the left panel.

5. The safety airbag assembly (100) according to claim 4, wherein the accommodating cavity (1202) starts extending from a top of the left panel of the air bag (110) and stops at a distance from a bottom of the left panel when the air bag (110) is in the inflated state.

6. The safety airbag assembly (100) according to claim 5, wherein one end of the pull belt (1201) is fixeded to a front side of the frame of the driver seat (20), and the other end of the pull belt (1201) is fixed to a rear side of the frame of the driver seat (20).

7. The safety airbag assembly (100) according to claim 6, wherein both ends of the pull belt (1201) are spaced apart by a distance in a height direction .

8. The safety airbag assembly according to claim 7, wherein both ends of the pull belt (1201) are arranged to be detachably fixed to the frame of the driver seat (20).

9. The safety airbag assembly according to claim 8, wherein both ends of the pull belt (101) are respectively provided with a mounting frame having a through hole, and the mounting frames respectively fix both ends of the pull belt to the frame of the driver seat via bolts.

## Patentansprüche

1. Sicherheitsairbaganordnung (100) für ein linksgelenktes Fahrzeug, wobei die Sicherheitsairbaganordnung (100) einen Fahrersitz (20) und einen Sicherheitsairbag (10), der auf der rechten Seite des Fahrersitzes (20) angeordnet ist, aufweist,
wobei der Sicherheitsairbag (10) aufweist:
einen Airbag (110), der einen entfalteten Zustand und einen verstauten Zustand aufweist, und
einen Begrenzungsmechanismus (120), der außerhalb des Airbags (110) angeordnet ist und konfiguriert ist, um eine Position des Airbags (110) im entfalteten Zustand zu begrenzen,
wobei der Begrenzungsmechanismus (120) einen Aufnahmehohlraum (1202) und einen Zuggurt (1201) umfasst, der Aufnahmehohlraum (1202) an einer Außenoberfläche des Airbags (110) vorgesehen ist und der Zuggurt (1201) konfiguriert ist, um durch den Aufnahmehohlraum (1202) zu verlaufen,
**dadurch gekennzeichnet, dass**
beide Enden des Zuggurtes (1201) jeweils an einem Rahmen des Fahrersitzes (20) befestigt sind.

2. Sicherheitsairbaganordnung (100) nach Anspruch 1, wobei der Aufnahmehohlraum (1202) als ein Kanal konfiguriert ist, der sich im entfalteten Zustand auf mindestens einem Element des Airbags (110) erstreckt, und der Zuggurt (1201) konfiguriert ist, um im Kanal frei beweglich zu sein.

3. Sicherheitsairbaganordnung (100) nach Anspruch 1 oder 2, wobei der Airbag (110) in einem entfalteten Zustand eine linkes Element, ein rechtes Element und ein Zwischenelement aufweist, welches das linke Element und das rechte Element verbindet, wobei das linke Element näher an einem Fahrer ist als das rechte Element und wobei sich der Aufnahmehohlraum (1202) des Begrenzungsmechanismus (120) am linken Element befindet.

4. Sicherheitsairbaganordnung (100) nach Anspruch 3, wobei sich der Aufnahmehohlraum (1202) des Begrenzungsmechanismus (120) entlang einer Außenkante des linken Elements erstreckt.

5. Sicherheitsairbaganordnung (100) nach Anspruch 4, wobei der Aufnahmehohlraum (1202) beginnt, sich von einem oberen Ende des linken Elements des Airbags (110) zu erstrecken und in einem Abstand von einem unteren Ende des linken Element endet, wenn der Airbag (110) im entfalteten Zustand ist.

6. Sicherheitsairbaganordnung (100) nach Anspruch 5, wobei eine Ende des Zuggurts (1201) an einer Vorderseite des Rahmens des Fahrersitzes (20) befestigt ist und das andere Ende des Zuggurts (1201) an einer Rückseite des Rahmens des Fahrersitzes (20) befestigt ist.

7. Sicherheitsairbaganordnung (100) nach Anspruch 6, wobei beide Enden des Zuggurts (1201) in einer Höhenrichtung um einen Abstand voneinander beabstandet sind.

8. Sicherheitsairbaganordnung nach Anspruch 7, wobei beide Enden des Zuggurts (1201) angeordnet sind, um an dem Rahmen des Fahrersitzes (20) lösbar befestigt zu werden.

9. Sicherheitsairbaganordnung nach Anspruch 8, wobei beide Enden des Zuggurts (101) jeweils mit einem Montagerahmen, der eine Durchgangsöffnung aufweist, versehen sind und die Montagerahmen jeweils beide Enden des Zuggurts über Schrauben an dem Rahmen des Fahrersitzes befestigen.

## Revendications

1. Ensemble de coussin gonflable de sécurité (100) destiné à un véhicule à conduite à gauche, ledit ensemble de coussin gonflable de sécurité (100) comprenant un siège conducteur (20) et un coussin gonflable de sécurité (10) étant agencé sur le côté droit du siège conducteur (20),
dans lequel le coussin gonflable de sécurité (10), comprend :
un coussin gonflable (110), ayant un état gonflé et un état rangé ; et
un mécanisme de limitation (120) disposé à l'extérieur du coussin gonflable (110) et conçu pour limiter une position du coussin gonflable (110) à l'état gonflé,
dans lequel le mécanisme de limitation (120) comprend une cavité de logement (1202) et une courroie de traction (1201), la cavité de logement (1202) est fournie sur une surface externe du coussin gonflable (110), et la courroie de traction (1201) est conçue pour passer à travers la cavité de logement (1202),
**caractérisé en ce que**
les deux extrémités de la courroie de traction (1201) sont respectivement fixées à un cadre du siège conducteur (20).

2. Ensemble de coussin gonflable de sécurité (100) selon la revendication 1, dans lequel la cavité de logement (1202) est conçue comme un canal s'étendant sur au moins un panneau du coussin gonflable (110) à l'état gonflé, et la courroie de traction (1201) est conçue pour se déplacer librement dans le canal.

3. Ensemble de coussin gonflable de sécurité (100) selon la revendication 1 ou la revendication 2, dans lequel le coussin gonflable (110), dans un état gonflé, a un panneau gauche, un panneau droit, et un panneau intermédiaire reliant le panneau gauche et le panneau droit, le panneau gauche étant plus proche d'un conducteur que le panneau droit, et la cavité de logement (1202) du mécanisme de limitation (120) est située sur le panneau gauche.

4. Ensemble de coussin gonflable de sécurité (100) selon la revendication 3, dans lequel la cavité de logement (1202) du mécanisme de limitation (120) s'étend le long d'un bord externe du panneau gauche.

5. Ensemble de coussin gonflable de sécurité (100) selon la revendication 4, dans lequel la cavité de logement (1202) commence à s'étendre à partir d'un sommet du panneau gauche du coussin gonflable (110) et s'arrête à une distance d'un fond du panneau gauche lorsque le coussin gonflable (110) est à l'état gonflé.

6. Ensemble de coussin gonflable de sécurité (100) selon la revendication 5, dans lequel une extrémité de la courroie de traction (1201) est fixée à un côté avant du cadre du siège conducteur (20), et l'autre extrémité de la courroie de traction (1201) est fixée à un côté arrière du cadre du siège conducteur (20).

7. Ensemble de coussin gonflable de sécurité (100) selon la revendication 6, dans lequel les deux extrémités de la courroie de traction (1201) sont espacées d'une distance dans une direction de hauteur.

8. Ensemble de coussin gonflable de sécurité selon la revendication 7, dans lequel les deux extrémités de la courroie de traction (1201) sont agencées pour être fixées de manière amovible au cadre du siège conducteur (20).

9. Ensemble de coussin gonflable de sécurité selon la revendication 8, dans lequel les deux extrémités de la courroie de traction (101) sont respectivement fournies avec un cadre de montage ayant un trou de passage, et les cadres de montage fixent respectivement les deux extrémités de la courroie de traction au cadre du siège conducteur par l'intermédiaire de boulons.
